(19) Europäisches Patentamt
European Patent Office
Office européen des brevets

(11) **EP 4 176 424 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **21730549.9**

(22) Anmeldetag: **31.05.2021**

(51) Internationale Patentklassifikation (IPC):
*G08G 1/0962* (2006.01)   *G08G 1/0967* (2006.01)
*G06V 10/42* (2022.01)   *G06V 10/75* (2022.01)
*G06V 20/58* (2022.01)

(52) Gemeinsame Patentklassifikation (CPC):
**G08G 1/096725; G06V 10/42; G06V 10/757; G06V 20/584; G08G 1/09623**

(86) Internationale Anmeldenummer:
**PCT/EP2021/064586**

(87) Internationale Veröffentlichungsnummer:
**WO 2022/002509 (06.01.2022 Gazette 2022/01)**

(54) **AMPELSPURZUORDNUNG AUS SCHWARMDATEN**

TRAFFIC LIGHT LANE ASSIGNMENT FROM SWARM DATA

ATTRIBUTION DE FEUX DE SIGNALISATION À UNE VOIE À PARTIR DE DONNÉES D'ESSAIM

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **03.07.2020 DE 102020208378**

(43) Veröffentlichungstag der Anmeldung:
**10.05.2023 Patentblatt 2023/19**

(73) Patentinhaber: **VOLKSWAGEN AKTIENGESELLSCHAFT**
**38440 Wolfsburg (DE)**

(72) Erfinder:
• **KLOMP, Sven**
**31311 Uetze / Dollbergen (DE)**
• **GRUBE KREBS, Pablo**
**10827 Berlin (DE)**
• **HESSEL, Toralf**
**13187 Berlin (DE)**
• **MAX, Stephan**
**38518 Gifhorn (DE)**

(56) Entgegenhaltungen:
EP-A1- 2 830 922   DE-A1- 102012 207 620
DE-A1- 102017 206 847   DE-A1- 102018 007 962

**Beschreibung**

Die Erfindung betrifft ein Verfahren zur Zuordnung von Ampeln zu den zugehörigen Fahrspuren einer Fahrbahn aus Schwarmdaten sowie eine Verwendung des Verfahrens in einem Fahrzeug.

Beim autonomen bez. automatischen Fahren eines Kraftfahrzeugs muss dieses an Kreuzungen mit komplexen Ampelsituationen zurechtkommen. Dazu ist eine automatische Erkennung der an einer Kreuzung vorhandenen Ampeln notwendig, wobei diese Erkennung auch eine Zuordnung der Ampeln zu den jeweiligen Fahrspuren umfassen muss, für die die Signale der Ampeln zuständig sind. Eine derartige automatische Erkennung von Ampeln an Kreuzungen ist aber nicht nur beim autonomen Fahren einsetzbar, sondern kann auch beim unterstützten oder halbautonomen Fahren eines Kraftfahrzeugs eingesetzt werden, um dem Fahrer beim Führen des Kraftfahrzeugs zu unterstützen.

Eine automatische Erkennung von Ampeln an einer Kreuzung beim automatischen Fahren verfolgt die folgenden Ziele:

- dem Fahrer eine mögliche Geschwindigkeit zur Ampelanlage zu empfehlen,
- automatisch vor der Ampel anzuhalten,
- den Fahrer bei einen versehentlichen Überfahren der Ampel zu warnen, und
- den Fahrer einen Weiterfahrhinweis zu geben, wenn die Ampel wieder grün wird.

Zur Umsetzung dieser Beispiele wird versucht, die Ampel mit der Frontkamera im Fahrzeug zu beobachten. Dabei muss die folgende Messaufgabe bewältigt werden:

- Die Kamera erkennt die Ampel im Vorfeld und vermisst diese hinsichtlich Position und Ausrichtung.
- Die Kamera erkennt die Spuren und Markierungen auf dem Boden und stellt so einen Zuordnung der Ampel zu den Spuren fest.
- Die Kamera beobachtet fortlaufend den Zustand der relevanten Ampel und gibt diese Information an die entsprechenden Funktion weiter.

In der Realität ist allerdings die Zuordnung von Ampel zu Fahrstreifen bedingt durch vielfältige und komplexe Kreuzungssituationen sehr schwierig zu ermitteln, was zu hohen Fehlraten bei der Zuordnung von Ampel zu Fahrstreifen führt.

Die Druckschrift DE 10 2014 205 953 A1 betrifft ein Verfahren zur Analyse einer Verkehrsumfeldsituation eines Fahrzeugs mit einem Navigationssystem und einem Sensorsystem, wobei das Navigationssystem eine Fahrzeugposition ermittelt und das Sensorsystem Bewegungsdaten des Fahrzeugs erfasst sowie ein Bewegungsverhalten des Fahrzeugs in Form von Bewegungstrajektorien des Fahrzeugs ermittelt, wobei die Fahrzeugposition und die Bewegungstrajektorien des Fahrzeugs einen Rückschluss auf das Vorhandensein und/ oder die Art wenigstens eines Merkmals der Umgebung ermöglichen, wobei ein Sensor des Sensorsystems das Merkmal erfasst und wenigstens eine Zusatzinformation über das Merkmal abspeichert.

Die Druckschrift DE 10 2018 210 125 A1 beschreibt ein Verfahren zur Zuordnung von Ampeln einer Ampelanlage eines von dieser Ampelanlage gesteuerten Fahrbahnabschnitts zu den Fahrspuren des Fahrbahnabschnitts, wobei der Fahrbahnabschnitt mindestens eine Fahrspur aufweist, die Fahrspuren des Fahrbahnabschnitts eine gemeinsame Fahrtrichtung aufweisen, und eine Vielzahl von Fahrzeugen den Fahrbahnabschnitt befahren, umfassend die Schritte:

- Erkennen einer vorausliegenden Ampelanlage durch jedes Fahrzeug, welches den Fahrbahnabschnitt befährt und sich auf die Ampelanlage zubewegt,
- kontinuierliches Erfassen der Ampelzustände der Ampeln der Ampelanlage, der befahrenen Fahrspur, der Fahrzeuggeschwindigkeit und der Fahrzeugposition durch jedes Fahrzeug, wobei die Erfassung in einer vorbestimmten Entfernung von der Ampelanlage beginnt und bis zum Passieren der Ampelanlage fortgeführt wird,
- Übermitteln der von jedem Fahrzeug aufgezeichneten Daten "Ampelzustände", "Fahrspur" und "Geschwindigkeit" in Form eines Datensatzes an einen Backend-Rechner,
- Durchführen folgender Auswertungen durch den Backend-Rechner für jeden fahrzeugspezifischen Datensatz:

  - Ermitteln der erkannten Ampelanlage auf einer Karte,
  - Erkennung der Bewegung des Fahrzeugs durch den Fahrbahnabschnitt,
  - Feststellung der Ampelzustände beim Passieren der Ampelanlage durch das Fahrzeug, und
  - Erstellen einer Zuordnungstabelle für die erkannte Ampelanlage aus den ausgewerteten Datensätzen, wobei die Zuordnungstabelle die Ampeln der Ampelanlage den Fahrspuren des Fahrbahnabschnitts zuordnet.

Die Druckschrift DE 10 2018 007 962 A1 betrifft ein Verfahren zur Erkennung von Ampelpositionen, wobei von einer Mehrzahl von Flottenfahrzeugen eine Verkehrsszene auf einer Ampelkreuzung mittels einer Kamera erfasst und in der erfassten Verkehrsszene Ampelkandidaten bestimmt und zu einem zentralen Backend hochgeladen werden, wobei im jeweiligen Flottenfahrzeug geometrische Positionen der Ampelkandidaten untereinander bestimmt und zum Backend hochgeladen werden, wobei im Backend bei Vorliegen einer Mehrzahl hochgeladener geometrischer Positionen zur gleichen Verkehrsszene eine statistische Analyse dieser Mehrzahl hochgeladener geometrischer Positionen erfolgt, derart dass häufig auftretende Ampelkandidaten als Ampeln interpretiert werden, während selten auftretende Ampelkandidaten als Fehldetektion interpretiert werden, wobei aus den als Ampeln interpretierten geometrischen Positionen ein Pattern mit Konfidenzintervallen der Ampelpositionen und ein distanzabhänqiqer Skalierungsfaktor erstellt und der jeweiligen Ampelkreuzung und einer bestimmten Fahrtrichtung zugeordnet wird.

Voraussetzung für das Erstellen einer Zuordnung der Ampeln einer Ampelanlage zu den Fahrspuren ist die genaue relative Lokalisierung der Egofahrzeuge in globalen Koordinaten. Als globales Koordinatensystem kann beispielsweise das semiglobale ENU-Koordinatensystem verwendet werden, wobei ENU für East-North-Up steht, welches für einen Bereich von mehreren hundert Metern um eine Referenzpunkt gültig ist.

Dies lässt sich einerseits erreichen durch eine hochgenaue Lokalisierung basierend auf Odometrie-Daten, GPS-Daten und gegebenenfalls weiteren visuellen Daten. Ist dies nicht gegeben, so kann andererseits eine Ad-hoc-Lokalisierung basierend auf einem nachträglichen Matching von Odometrie-Daten, GPS-Daten und Ampel-Daten der jeweiligen Egofahrzeugs erfolgen.

Wenn keine hochgenaue Lokalisierung der Fahrzeuge verfügbar ist, so lässt sich bei der Ad-hoc-Lokalisierung im Egofahrzeug unter Umständen dessen gefahrene Spur nicht genau genug bestimmen. Diese ist aber zwingend erforderlich, da die Ampel-Spur-Zuordnung im Backend-Server das erklärte Ziel ist.

Der Erfindung liegt daher die Aufgabe zugrunde, ein Verfahren zur Bestimmung der Fahrspur des Ego-Fahrzeugs anzugeben, so dass eine verbesserte Zuordnung von Ampeln zu Fahrspuren möglich ist.

Diese Aufgabe wird durch ein Verfahren mit den Merkmalen des Anspruchs 1 sowie durch die Verwendung des Verfahrens mit den Merkmalen des Anspruchs 5 gelöst. Bevorzugte Ausführungsformen der Erfindung sind Gegenstand der Unteransprüche.

Das erfindungsgemäße Verfahren zur Zuordnung von Ampeln zu den zugehörigen Fahrspuren einer Fahrbahn aus Schwarmdaten in einem Backendserver ist durch die Merkmale des unabhängigen Anspruchs 1 definiert.

Die Zuordnung von Ampeln bzw. Ampelgruppen zu den jeweiligen Fahrspuren kann dann beginnen, wenn die Ampelpositionen und Ampelobjekte feststehen. Mit jedem neuen Satz Daten aus den einzelnen Überfahrten kann dann eine Nachkorrektur vorgenommen werden. Vorzugsweise wird ein Matching durchgeführt, wenn im Backendserver eine vorbestimmte Anzahl unterschiedlicher Überfahrten für eine vorbestimmte Kombination aus Kreuzung und Anfahrtsrichtung vorliegen. Mit anderen Worten, es muss eine Mindestanzahl an Überfahrtdaten vorliegen, um zu vernünftigen Ergebnissen zu kommen, wobei beispielsweise die vorbestimmte Anzahl bei zwanzig Überfahrten liegen könnte. Dieser Vorgang sollte in regelmäßigen Abständen mit neuen Daten wiederholt werden, um den Fall abzudecken, dass bauliche oder programmtechnische Änderungen an der Kreuzung vorgenommen wurden.

Außerdem wird aus einer Verknüpfung des für jede einzelne Überfahrttrajektorie berechneten Versatzvektors mit dem in den konsolidierten Daten enthaltenen Ausrichtungsvektor der jeweiligen Fahrzeugtrajektorie die Ego-Fahrspur jeder einzelnen Überfahrt ermittelt.

Dazu werden vorzugsweise die folgenden die Schritte durchgeführt:

- Projizieren des berechneten Versatzvektors für eine Überfahrt auf den Ausrichtungsvektor der jeweiligen Fahrzeugtrajektorie, wobei die Projektion ein Maß für die Querposition des Egofahrzeugs beim Überfahren der Haltelinie ergibt,
- Sammeln der Querpositionen in einer 1D-Punktwolke, und
- Clustern der 1 D-Punktwolke mittels des DBSCAN-Algorithmus, wobei jeder sich ergebende Cluster einer Spur entspricht.

Weiter bevorzugt beträgt der Maximalabstand zwischen Punkten eines Clusters 1 m und die Mindestanzahl pro Cluster beträgt 3.

Die erfindungsgemäße Verwendung des im Vorangegangenen beschriebenen Verfahrens erfolgt in einem Backendserver, wo mittels des Verfahrens eine Zuordnung von Ampeln zu den zugehörigen Fahrspuren einer Fahrbahn aus Schwarmdaten und Abspeichern der Zuordnung in einer Datenbank zur weiteren Verwendung und Abruf in einem autonomen Fahrzeug vorgenommen wird.

Eine bevorzugte Ausführungsform der Erfindung wird nachfolgend anhand der Zeichnungen erläutert. Dabei zeigt

Fig. 1    die Erfassung von Schwarmdaten und deren Verarbeitung zur Zuordnung von Ampeln zu Fahrstreifen, und

Fig.2    das Matching der an den Server übertragenen Ampelobjekte.

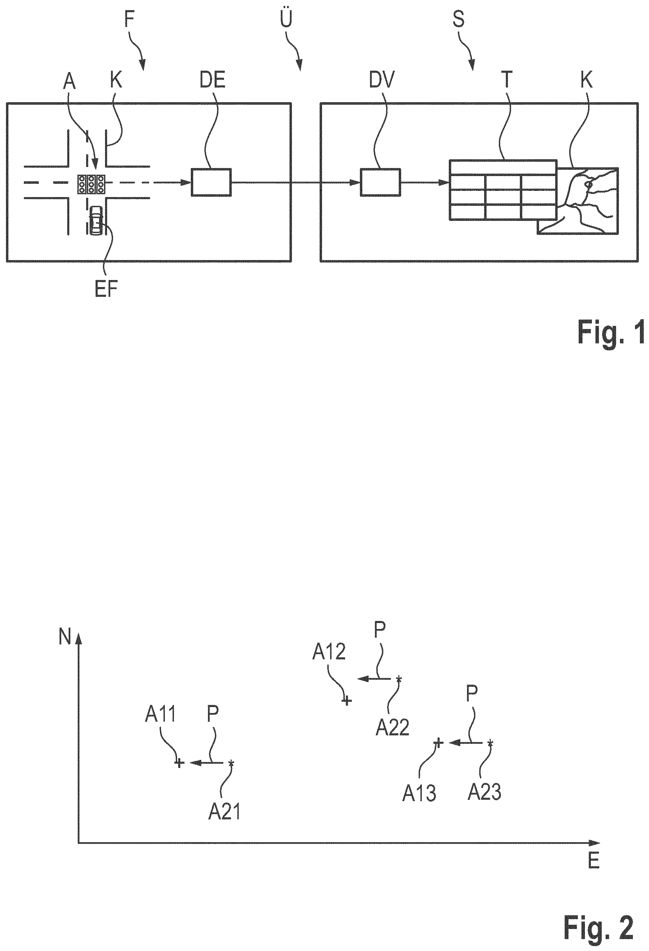

Fig. 1 zeigt die dem Verfahren zugrundeliegende schematische Aufteilung der Datenerhebung und Verarbeitung zur Zuordnung von Ampeln zu Fahrspuren aus Schwarmdaten.

Fahrzeugseitig wird die Erfassung der Ampeln A im Fahrzeugbereich F bei jeder Überfahrt der Kreuzung K gestartet. Dabei werden die notwendigen Signale, nämlich Bewegung des Egofahrzeugs EF, Ampeln A und Objekte (nicht dargestellt) im Umfeld des Ego-Fahrzeugs EF mittels einer Kamera (nicht dargestellt) aufgenommen und es wird eine erste Verarbeitung DE im Ego-Fahrzeug EF ausgeführt. Im Anschluss wird der aus der ersten Verarbeitung DE resultierende Datensatz mittels einer Übertragungsstrecke Ü, beispielsweise einer Mobilfunkverbindung, an den Server S übertragen.

Die einzelnen Schritte im Fahrzeugbereich F sind:

- Erkennung der Ampelsignale,
- Tracking und Ego-Kompensation der erfassten Ampeln pro Überfahrt,
- Filtern von ungültigen Ampelobjekten,
- Erkennung relevanter "Ego-Events" wie beispielsweise der Zeitpunkt zu dem das Ego-Fahrzeug die Kreuzung überfährt,
- Übertragung der konsolidierten Daten an den Server, nämlich zumindest

   - Ampeldaten, nämlich Positionen und Phasenverläufe, eines Ampelobjekts,
   - fahrzeugbezogene Daten wie Bewegungszustand und Bewegungsrichtung des Fahrzeugs, Ausrichtungsvektor der Fahrzeugtrajektorie, Ampellinie und Haltelinie auf der Ego-Trajektorie sowie Abbiegerichtung, und
   - Umfelddaten, wie vorrausfahrende Fahrzeuge inklusive deren Geschwindigkeit.

Damit im Serverbereich S eine Zuordnung von Spuren zu Ampeln erfolgen kann, sind die an den Server übertragenen Positionsdaten der Ampeldaten in Koordinaten (x, y, z) eines globalen Koordinatensystems ausgedrückt, beispielsweise im bereits erwähnten ENU-System (East-North-Up).

Der Serverbereich S bekommt die beschriebenen Daten aus dem Fahrzeugbereich F von den Kreuzungsüberfahrten mehrerer Fahrzeuge zugeführt und bearbeitet sie in der Datenverarbeitung und Zuordnung DV, also dem externen Backend-Rechner, folgendermaßen:

- Abgleich und Clustering der gesammelten Ampeldaten um ein Ampelbild pro Kreuzung und Anfahrtrichtung zu erstellen,
- Gruppierung der resultierenden Ampeln in Gruppen mit gemeinsamem Phasenverlauf,
- Zuordnung der resultierenden Ampelgruppen zu Fahrspuren, und
- Eintragung der Ergebnisse in eine Datenbasis T und/oder eine digitale Karte K.

Die Funktion der Zuordnung von Ampeln zu Fahrspuren aus Schwarmdaten muss mit Ampeln A auf unterschiedliche Ebenen arbeiten. Um Verwirrungen zu vermeiden werden folgende Begriffe verwendet:

Ampelobjekt: Ein vom Erfassungssystem, beispielsweise von einer entsprechenden Kamera geliefertes (getracktes) Ampelobjekt. Fehlerhafte Erfassung kann dazu führen, dass mehrere Ampelobjekte für dasselbe physikalische Ampelsignal während derselben Überfahrt erzeugt werden.

Ampel: Diese stehen stellvertretend für eine physikalische Ampel A an einer gegebenen Kreuzung K und Anfahrtsrichtung und wird erzeugt, indem mehrere Ampelobjekte geclustert werden.

Ampelgruppe: Gruppe von Ampeln die das gleiche Phasenverhalten aufweisen und somit einer einzigen logischen Ampel entsprechen.

Um die hier interessierende Datenverarbeitung im Backendserver durchführen zu können, sammelt der Server also Daten unterschiedlicher Fahrzeuge bezüglich deren Kreuzungsüberfahrten und ordnet diese zunächst nach der Kreuzungs-Identifikation und der Anfahrtrichtung in einer entsprechenden Tabelle.

Der Serverbereich S hat folglich zwei Hauptaufgaben:

- Die Ampelpositionen der hier aus mehreren Überfahrten gelieferten Ampelobjekte zu matchen und zu clustern, um daraus Ampeln und Ampelgruppen abzuleiten. Dieser Schritt kann normalerweise dann erfolgen, wenn Daten von mindestens 20 Überfahrten vorliegen, und zwar unabhängig von der gefahrenen Spur, und sollte in regelmäßigen Abständen mit neuen Daten wiederholt werden, um den Fall abzudecken, dass bauliche oder programmtechnische Änderungen an der Kreuzung vorgenommen worden sind.

- Die Zuordnung von Spuren zu Ampelgruppen. Dieses Online-Verfahren kann beginnen, sobald die Ampelpositionen und Ampelobjekte feststehen. Mit jedem neuen Datensatz aus einzelnen Überfahrten kann die Zuordnung nach korrigiert werden.

Bei der Verarbeitung im Serverbereich S muss unterschieden werden zwischen Daten, die aus unterschiedlichen Überfahrten stammen. Dazu werden die relevanten Variablen, insbesondere Positionen der Ampelobjekte und der Ampellinien, mit einem zusätzlichen Index c versehen, c = 1... C, mit C Anzahl der übertragenen Überfahrtsdatensätze. Folglich würde der Ausdruck $p_{n_c}$ das $n_c$ - *te* Ampelobjekt der c-ten Überfahrt bezeichnen.

Die in Egofahrzeug EF anhand der Ego-Trajektorie vorgenommene Bestimmung der Ampelobjektpositionen ist nicht ausreichend für eine überfahrtsübergreifenden Positionierung der Ampelobjekte, da dies auf ungenauen GPS-Koordinaten erfolgt.

Figur 2 zeigt in prinzipieller Darstellung die Korrektur und Bestimmung der Ampelobjektpositionen anhand eines Matching der Ampelbilder aus unterschiedlichen Überfahrten. Verwendet werden in Figur 2 die Koordinaten N und E eines ENU-Koordinatensystems (East-North-Up), wobei die Up-Komponente keine Rolle spielt, wie dies später erläutert werden wird. Mit anderen Worten, es werden in Figur 2 die Ampel-Objektkoordinaten in der horizontalen Ebene East-North betrachtet.

Dargestellt sind die N- und E-Koordinaten zweier Ampelobjekte, nämlich die durch ein Kreuz symbolisierten Koordinaten A11, A12 und A13 einer Punktwolke eines ersten Ampelobjekts 1 einer ersten Überfahrt und die durch einen Stern symbolisierten Koordinaten A21, A22 und A33 einer Punktwolke einer zweiten Überfahrt eines zweiten Ampelobjekts der gleichen Ampel.

Das Matching der beiden Punktwolken erfolgt über einen ICP-Algorithmus, den sogenannten "Iterative Closest Point Algorithm". Dieser Algorithmus ermöglicht das aneinander anpassen von Punktwolken die bereits näherungsweise aufeinander ausgerichtet sind. Bei der Durchführung des Algorithmus wird versucht, die Punktwolken mittels Rotation und Translation möglichst gut miteinander in Deckung zu bringen. Das heißt, im allgemeinen Fall ergibt dies eine Rotationsmatrix und einen Versatzvektor über welche gemäß einem vorgegebenen Optimalitätkriterium eine der beiden Punktwolken transformiert werden muss, sodass sie der anderen Punktwolke möglichst nahekommt. Im Fall der Figur 2 bedeutet dies, dass ein durch einen Pfeil dargestellter Versatzvektor gesucht wird, der die Punktwolke A21, A22 und A23 des zweiten Ampelobjekts nach links verschiebt, so dass die genannte Punktwolke der Punktwolke A11, A12 und A13 des ersten Ampelobjekts möglichst nahe liegt. Die Verschiebung oder der Versatzvektor wird in Figur 2 durch die Pfeile P symbolisiert. Da die Verschiebung nicht gleichmäßig ist, können nicht alle Punkte der Punktwolken genau gematcht werden, d.h. zur Übereinstimmung gebracht werden, wie dies anhand der Punkte A12 und A22 ersichtlich ist.

In der Praxis werden die folgenden Schritte durchlaufen, wenn genügend Daten aus einzelnen Überfahrten für eine gegebene Kombination aus Kreuzung und Anfahrtsrichtung im Server, also im Backend, vorliegen:

- Es wird der Überfahrtsdatensatz mit den meisten Ampelobjekten als Referenzdatensatz ausgewählt.

- Die Ampel-Objektpunkte jedes einzelnen Überfahrt-Datensatzes werden durch den ICP-Algorithmus auf den Referenzdatensatz abgebildet, mit anderen Worten gematcht. Dabei bilden die Positionen der einzelnen Ampelobjekte die entsprechende Punktwolke und es wird die Transformation gesucht, über welche sich die beiden Punktwolken am nächsten kommen. Dabei wird der im Vorangegangenen beschriebene ICP-Algorithmus auf einen reinen Versatz in der horizontalen Ebene eingeschränkt und eine Rotation wird nicht berücksichtigt. Mit anderen Worten, die Transformation wird auf einen reinen 2D Versatz $\Delta p_{n_c}$ in der horizontalen Ebene beschränkt, welche in der Fig. 2 durch East E und North N gebildet wird. Dies ist gerechtfertigt, da sowohl die Ausrichtungsinformation aus dem GPS-basierten Lokalisierungsverfahren als auch die verfügbare Höheninformation Up U bereits ausreichend genug sind. Jeder Durchlauf des ICP-Algorithmus besteht aus ca. 100 Iterationen.

- Die Ampelpositionen der einzelnen Überfahrtsdatensätze ungleich dem Referenzdatensatz werden über die ermittelten Versätze korrigiert:

$$p''_{n_c} = p_{n_c} + \Delta p_{n_c}$$

Ein Hauptvorteil dieses Verfahrens ist, dass die Ampelposition auch ohne Information, auf welche Spur das Ego-Fahrzeug bei einer gegebenen Überfahrt nicht gefunden hat, abgeleitet werden kann, falls die Punktwolken der Ampelobjekte ausreichend dicht sind. Mit anderen Worten, dichter Verkehr und/oder eine häufige Abdeckung der Ampeln kann zu unbefriedigenden Ergebnissen führen.

Als Nebenprodukt der Bestimmung der Positionen der Ampeln über das Matching der Ampelobjekte kann die Ego-Spur jeder einzelnen Überfahrt aus dem Verfahren abgeleitet werden.

Basis für die Bestimmung der Ego-Spur jeder einzelnen Überfahrt ist der durch den ICP-Algorithmus für jede Überfahrttrajektorie berechnete Versatzvektor $\Delta p_{n_c}$. Dieser wird auf den Trajektorienausrichtungsvektor der einzelnen Überfahrt projiziert, wobei die resultierende Zahl ein Maß für die Querposition des Ego-Fahrzeugs beim Überfahren der Haltelinie ergibt. Die Querpositionen aus den einzelnen Überfahrten werden in einer eindimensionalen "Punktwolke" gesammelt und mittels eines DBSCAN-Algorithmus (Density-based Spatial Clustering of Applications with Noise) geclustert. Jedes resultierende Cluster entspricht einer Fahrspur und es können daraus die einzelnen Überfahrtdatensätze zugeordnet werden.

Dabei ist die Grundidee des DBSCAN-Algorithmus der Begriff der Dichteverbundenheit, wobei 2 Objekte als Dichteverbunden gelten, wenn es eine Kette von dichten Objekten, sogenannten Kernobjekten, gibt die diese Punkte miteinander verbinden. Die durch dieselben Kernobjekte miteinander verbundenen Objekte bilden einen Cluster. Dabei verfügt der Algorithmus über 2 Parameter, nämlich die sogenannte Nachbarschaftslänge oder maximale Abstand sowie die Mindestanzahl der mindestens erreichbaren Nachbarn. Im vorliegenden Fall beträgt der maximale Abstand zwischen zwei Punkten im selben Cluster 1 Meter und die Mindestanzahl an Punkten pro Cluster beträgt drei.

Falls weniger Cluster resultieren als es Spuren an der Kreuzung gibt, bedeutet dies normalerweise nur, dass eine der Spuren noch nicht oft genug befahren worden ist, um sie eindeutig zu identifizieren. In diesem Fall müssen weitere Überfahrtdatensätze gesammelt werden, bis die Clusteranzahl stimmt.

Bezugszeichenliste

| | |
|---|---|
| F | Fahrzeugbereich |
| EF | Egofahrzeug |
| K | Kreuzung |
| A | Ampeln |
| DE | Datenerfassung und Vorverarbeitung |
| Ü | Übertragung (drahtlos) |
| S | Server |
| DV | Datenverarbeitung und Zuordnung |
| T | Tabelle |
| K | Karte |

| | |
|---|---|
| N | North |
| E | East |
| A11 | Punkt 1 der Ampelpunktwolke 1 |
| A12 | Punkt 2 der Ampelpunktwolke 1 |
| A13 | Punkt 3 der Ampelpunktwolke 1 |
| A21 | Punkt 1 der Ampelpunktwolke 2 |
| A22 | Punkt 2 der Ampelpunktwolke 2 |
| A23 | Punkt 3 der Ampelpunktwolke 2 |

**Patentansprüche**

1. Verfahren zur Zuordnung von Ampeln (A) zu den zugehörigen Fahrspuren einer Fahrbahn aus Schwarmdaten in einem Backendserver (S) mit den Schritten:

- Empfangen konsolidierter Daten pro Ampelüberfahrt der Fahrzeuge eines Schwarms für eine vorbestimmte Kreuzung (K), wobei die konsolidierten Daten für jede Kreuzungsüberfahrt zumindest ein Ampelbild mit den Positionen der einzelnen Lichtsignale in globalen Koordinaten (N, E) enthält,
- Auswählen des Überfahrtsdatensatz mit den meisten Ampelobjekten als Referenzdatensatz für eine vorbestimmte Kombination aus Kreuzung (K) und Anfahrtsrichtung,
- Matching der aus Punktwolken bestehenden Ampelbilder unterschiedlicher Ampelüberfahrten für eine vorbestimmte Kombination aus Kreuzung (K) und Anfahrtsrichtung, indem einzelne Paare von Ampelobjektpunkten der Punktwolken aufeinander abgebildet werden, wobei das Matching über einen Iterative Closest Point Algorithmus, kurz ICP-Algorithmus, erfolgt, welcher gemäß einem vorgegebenen Optimalitätskriterium mittels einer Transformation umfassend eine Rotationsmatrix und einen Versatzvektor (P) eine von zwei Punktwolken so transformiert, dass sie der anderen Punktwolke möglichst nahekommt,
- Suchen der Transformation, bei der sich die Punktwolken am nächsten kommen, wobei die Transformation auf den Versatzvektor (P) in den zwei horizontalen Dimensionen eingeschränkt ist, Korrektur der Ampelpositionen aufgrund der Matching-Ergebnisse durch Korrigieren der Ampelpositionen der einzelnen Überfahrtsdatensätze ungleich dem Referenzdatensatz mit dem für den jeweiligen Überfahrtsdatensatz ungleich dem Referenzdatensatz ermittelten Versatzvektor (P) und

- Ermitteln einer Ego-Fahrspur aus einer Verknüpfung des für jede einzelne Überfahrttrajektorie berechneten Versatzvektors (P) mit einem in den konsolidierten Daten enthaltenen Ausrichtungsvektor der jeweiligen Fahrzeugtrajektorie.

2. Verfahren nach einem der vorangegangenen Ansprüche, wobei ein Matching durchgeführt wird, wenn im Backendserver (S) eine vorbestimmte Anzahl unterschiedlicher Überfahrten für eine vorbestimmte Kombination aus Kreuzung (K) und Anfahrtsrichtung vorliegen.

3. Verfahren nach Anspruch 1, umfassend die Schritte:

- Projizieren des berechneten Versatzvektors (P) für eine Überfahrt auf den Ausrichtungsvektor der jeweiligen Fahrzeugtrajektorie, wobei die Projektion ein Maß für die Querposition des Egofahrzeugs (EF) beim Überfahren der Haltelinie ergibt,
- Sammeln der Querpositionen in einer 1D-Punktwolke, und
- Clustern der 1D-Punktwolke mittels des DBSCAN-Algorithmus, wobei jeder sich ergebende Cluster einer Spur entspricht.

4. Verfahren nach Anspruch 3, wobei der Maximalabstand zwischen Punkten eines Clusters 1m und die Mindestanzahl pro Cluster 3 beträgt.

5. Verwendung des Verfahrens nach einem der vorangegangenen Ansprüche in einem Backendserver (S) zur Zuordnung von Ampeln (A) zu den zugehörigen Fahrspuren einer Fahrbahn aus Schwarmdaten und Abspeichern der Zuordnung in einer Datenbank zur weiteren Verwendung und Abruf in einem autonomen Fahrzeug (EF).

**Claims**

1. Method for assigning traffic lights (A) to the corresponding lanes of a roadway from swarm data in a backend server (S), the method comprising the steps of:

- receiving consolidated data for each traffic light crossing relating to the vehicles of a swarm for a predetermined intersection (K), wherein the consolidated data for each intersection crossing contains at least one traffic light image with the positions of the individual traffic lights in global coordinates (N, E),
- selecting the crossing data set having the most traffic light objects as the reference data set for a predetermined combination of intersection (K) and approach direction,
- matching the traffic light images, consisting of point clouds, of different traffic light crossings for a predetermined combination of intersection (K) and approach direction by mapping individual pairs of traffic light object points of the point clouds with respect to one another, wherein the matching is carried out via an iterative closest point algorithm, ICP algorithm for short, which transforms one of two point clouds according to a predetermined optimality criterion by means of a transformation comprising a rotation matrix and an offset vector (P) so that it is as close as possible to the other point cloud,
- searching for the transformation in which the point clouds are closest to each other, wherein the transformation is restricted to the offset vector (P) in the two horizontal dimensions, correcting the traffic light positions based on the matching results by correcting the traffic light positions of the individual crossing data sets that are different from the reference data set using the offset vector (P) determined for the relevant crossing data set that is different from the reference data set, and
- determining an ego lane from a combination of the offset vector (P) calculated for each individual crossing trajectory with an orientation vector, contained in the consolidated data, of the relevant vehicle trajectory.

2. Method according to any of the preceding claims, wherein matching is carried out when a predetermined number of different crossings for a predetermined combination of intersection (K) and approach direction are present in the backend server (S).

3. Method according to claim 1, comprising the steps of:

- projecting the calculated offset vector (P) for a crossing onto the orientation vector of the relevant vehicle trajectory, wherein the projection results in a measure of the transverse position of the ego vehicle (EF) when crossing the stop line,
- collecting the transverse positions in a 1D point cloud, and
- clustering the 1D point cloud using the DBSCAN algorithm, wherein each resulting cluster corresponds to a lane.

**4.** Method according to claim 3, wherein the maximum distance between points of a cluster is 1m and the minimum number per cluster is 3.

**5.** Use of the method according to any of the preceding claims in a backend server (S) for assigning traffic lights (A) to the associated lanes of a roadway from swarm data and storing the assignment in a database for further use and retrieval in an autonomous vehicle (EF).

**Revendications**

**1.** Procédé d'affectation de feux de signalisation (A) aux voies de circulation correspondantes d'une chaussée à partir de données en essaim dans un serveur dorsal (S), comportant les étapes de :

- réception de données consolidées par passage aux feux de signalisation des véhicules d'un essaim pour une intersection prédéterminée (K), dans lequel les données consolidées pour chaque passage d'intersection contiennent au moins une image de feux de signalisation comportant les positions des signaux lumineux individuels en coordonnées globales (N, E),
- sélection du jeu de données de passage comportant le plus d'objets de feux de circulation comme jeu de données de référence pour une combinaison prédéterminée d'intersection (K) et de direction d'approche,
- mise en correspondance des images de feux de signalisation, constituées de nuages de points, de différents passages de feux de signalisation pour une combinaison prédéterminée de croisement (K) et de direction d'approche, en faisant correspondre des paires individuelles de points d'objets de feux de signalisation des nuages de points, dans lequel la mise en correspondance s'effectue par l'intermédiaire d'un algorithme itératif des points les plus proches, en abrégé algorithme ICP, qui, selon un critère d'optimalité prédéfini, transforme l'un de deux nuages de points au moyen d'une transformation comprenant une matrice de rotation et un vecteur de décalage (P), de telle sorte qu'il se rapproche le plus possible de l'autre nuage de points,
- recherche de la transformation, dans laquelle les nuages de points sont les plus proches les uns des autres, dans lequel la transformation est limitée au vecteur de décalage (P) dans les deux dimensions horizontales, correction des positions de feux de signalisation sur la base des résultats de mise en correspondance en corrigeant les positions de feux de signalisation des jeux de données de passage individuels différents du jeu de données de référence avec le vecteur de décalage (P) établi pour le jeu de données de passage respectif différent du jeu de données de référence et
- établissement d'une voie de circulation d'ego à partir d'une association du vecteur de décalage (P) calculé pour chaque trajectoire de passage individuelle avec un vecteur d'alignement de la trajectoire de véhicule respective contenu dans les données consolidées.

**2.** Procédé selon l'une des revendications précédentes, dans lequel une mise en correspondance est réalisée lorsqu'un nombre prédéterminé de passages différents sont présents dans le serveur dorsal (S) pour une combinaison prédéterminée de croisement (K) et de direction d'approche.

**3.** Procédé selon la revendication 1, comprenant les étapes de :

- projection du vecteur de décalage (P) calculé pour un passage sur le vecteur d'alignement de la trajectoire de véhicule respective, dans lequel la projection donne une mesure de la position transversale du véhicule ego (EF) lors du passage de la ligne d'arrêt,
- collecte des positions transversales dans un nuage de points 1 D, et
- regroupement du nuage de points 1 D au moyen de l'algorithme DBSCAN, dans lequel chaque groupe résultant correspond à une voie.

**4.** Procédé selon la revendication 3, dans lequel la distance maximale entre les points d'un groupe est de 1 m et le nombre minimal par groupe est de 3.

**5.** Utilisation du procédé selon l'une des revendications précédentes dans un serveur dorsal (S) pour l'affectation de feux de signalisation (A) aux voies de circulation correspondantes d'une chaussée à partir de données en essaim et mémorisation de l'affectation dans une base de données pour une utilisation ultérieure et un appel dans un véhicule autonome (EF).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014205953 A1
- DE 102018210125 A1
- DE 102018007962 A1